(19) Europäisches Patentamt
European Patent Office
Office européen des brevets

(11) **EP 3 182 137 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
*G01P 3/487* *(2006.01)*    *G01D 5/14* *(2006.01)*

(21) Anmeldenummer: **16203169.4**

(22) Anmeldetag: **09.12.2016**

(54) **MAGNETEINHEIT FÜR EINE SENSOREINRICHTUNG EINES KRAFTFAHRZEUGS, SENSOREINRICHTUNG MIT EINER MAGNETEINHEIT UND KRAFTFAHRZEUG MIT EINER SENSOREINRICHTUNG**

MAGNET UNIT FOR A SENSOR DEVICE OF A MOTOR VEHICLE, SENSOR DEVICE WITH A MAGNET UNIT AND MOTOR VEHICLE HAVING A SENSOR DEVICE

UNITÉ MAGNÉTIQUE POUR UN DISPOSITIF DE DÉTECTION D'UN VÉHICULE AUTOMOBILE, DISPOSITIF DE DÉTECTION COMPRENANT UNE UNITÉ MAGNÉTIQUE ET VÉHICULE AUTOMOBILE COMPRENANT UN DISPOSITIF DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2015 DE 102015122176**

(43) Veröffentlichungstag der Anmeldung:
**21.06.2017 Patentblatt 2017/25**

(73) Patentinhaber: **Valeo Schalter und Sensoren GmbH**
**74321 Bietigheim-Bissingen (DE)**

(72) Erfinder:
• **Froehlich, Ekkehart**
  **74321 Bietigheim-Bissingen (DE)**
• **Thom, Jens**
  **74321 Bietigheim-Bissingen (DE)**

(56) Entgegenhaltungen:
DE-A1-102008 047 466    DE-A1-102009 039 082
DE-A1-102013 006 567    DE-A1-102013 015 452

**Beschreibung**

Die Erfindung betrifft eine Magneteinheit für eine Sensoreinrichtung zum Erfassen einer einen Rotationszustand einer Lenkwelle eines Kraftfahrzeugs charakterisierenden Messgröße, wobei die Magneteinheit eine Hülse zum Verbinden der Magneteinheit mit einem ersten Teil der Lenkwelle sowie ein mit der Hülse verbundenes Magnetelement mit einem magnetisch wirksamen Magnetabschnitt aufweist. Die Erfindung betrifft außerdem eine Sensoreinrichtung zum Erfassen einer einen Rotationszustand einer Lenkwelle eines Kraftfahrzeugs charakterisierenden Messgröße sowie ein Kraftfahrzeug mit einer solchen Sensoreinrichtung.

Gattungsgemäße Magneteinheiten werden beispielsweise in Drehmomentsensoreinrichtungen zur Erfassung eines auf eine Lenkwelle eines Kraftfahrzeugs aufgebrachten Drehmoments eingesetzt und sind grundsätzlich aus dem Stand der Technik bekannt, beispielsweise aus der EP 0 980 081 B1, der EP 1 123 794 A2, der US 5,530,344 oder der DE 10 2013 006 567 A1.

Die Magneteinheit ist dabei üblicherweise dazu ausgebildet, an einem von zwei, sich in axialer Richtung gegenüberliegenden Teilen der Lenkwelle befestigt zu werden, wobei zur Erfassung des Rotationszustandes der Lenkwelle auf dem anderen Wellenteil eine Sensoreinheit befestigt werden kann mit einem magnetischen Stator, welcher dazu vorgesehen ist, in radialer Richtung gegenüber von dem Magnetelement der Magneteinheit mit einem kleinen Luftspalt dazwischen angeordnet zu werden. Mithilfe des Stators kann der im Magnetelement auftretende, vom Rotationszustand der Welle abhängige magnetische Fluss zur Erzeugung eines Sensorsignals vom Magnetelement über einen Flussleiter weiter an einen Magnetsensor geleitet werden, beispielsweise an einen Hall-Sensor.

Gattungsgemäße Magneteinheiten weisen üblicherweise ein als Permanentmagnet ausgebildetes, ringförmiges Magnetelement auf sowie in der Regel eine metallische Hülse, über welche die Magneteinheit mit der Lenkwelle verbunden werden kann, wobei bekannt ist, die Hülse beispielsweise mittels Kleben, Schweißen, Verstemmen oder mittels einer Presspassung drehfest mit der Lenkwelle zu verbinden.

Die Herausforderung besteht dabei einerseits darin, eine dauerhaft drehfeste Verbindung der Magneteinheit mit der Lenkwelle sicherzustellen, sowie andererseits eine möglichst spielfreie, drehfeste Verbindung zwischen dem Magnetelement und der Hülse bereitzustellen.

Das Magnetelement gattungsgemäßer Magneteinheiten besteht dabei üblicherweise aus einem mit Magnetpartikeln gefüllten Kunststoff und wird in der Regel im Kunststoffspritzgießverfahren hergestellt, wobei das Magnetelement direkt an die Hülse angespritzt werden kann bzw. die Hülse mit dem Magnetmaterial umspritzt werden kann.

Aufgrund des in der Regel hohen Füllgrads mit den magnetischen Partikeln ist der Kunststoff, insbesondere bei tiefen Temperaturen, in der Regel relativ spröde bzw. wenig elastisch. Infolgedessen kann es, insbesondere wenn das Magnetelement direkt an die Hülse angespritzt wird bzw. wenn die Hülse mit dem Magnetmaterial umspritzt wird, beim Abkühlen der Kunststoffschmelze zu thermisch bedingten Schrumpfspannungen kommen, welche zur Bildung von Rissen im Magnetelement führen können. Ferner kann es bei im Betrieb auftretenden Temperaturschwankungen aufgrund der unterschiedlichen thermischen Ausdehnungskoeffizienten von Hülse und Magnetelement zu thermisch induzierten Spannungen in der Magneteinheit kommen, welche ebenfalls zu einer Rissbildung im Magnetelement führen können.

Aus diesem Grund wird in der vorgenannten EP 1 123 794 A2 vorgeschlagen, das Magnetelement nicht unmittelbar, sondern über ein Zwischenelement aus einem elastischen Material an der Hülse zu befestigen. Diese Lösung ist jedoch relativ aufwendig und kostenintensiv und erfordert einen gewissen Bauraum.

Aus der ebenfalls vorgenannten E 0 980 081 B1 ist bekannt, die Hülse mit dem kunststoffgebundenen Magnetmaterial direkt zu umspritzen, wobei zur Aufnahme von thermisch bedingten Schrumpfspannungen des Kunststoffs vorgeschlagen wird, an der Hülse mehrere, in Umfangsrichtung verteilt angeordnete Laschen vorzusehen.

Aus der DE 10 2013 006 567 A1 ist ferner ein Magnetelement bekannt, bei dem die Hülse und das Magnetelement zunächst separat hergestellt und anschließend formschlüssig miteinander verbunden werden. Die Hülse weist dazu einen buchsenförmigen Grundkörper und eine Vielzahl von vom Grundkörper in axialer Richtung abstehende Laschen auf, die zur Verbindung mit dem Magnetelement vorgesehen sind, wobei das Magnetelement entsprechend zu den in axialer Richtung abstehenden Laschen der Hülse korrespondierend angeordnete und ausgebildete Aussparungen aufweist, in welche die Laschen zum Verbinden von Hülse und Magnetelement unter Erwärmen des Magnetelements eingebracht werden können, wobei die Hülse und das Magnetelement dabei derart ausgebildet sind, dass die Laschen nach dem Abkühlen des Magnetelementes fest in den Aussparungen sitzen, so dass die Hülse und das Magnetelement zumindest in tangentialer Richtung drehfest und spielfrei miteinander verbunden sind.

Die DE 10 2009 039 082 A1 beschreibt eine Magnetbaugruppe mit einem Magnetring, der mittels einer Trägerhülse über eine Verbindungsgeometrie auf einer Welle angebracht ist, insbesondere für eine Drehmoment- und/oder Drehwinkelsensoranordnung. Der Magnetring ist radial über der Trägerhülse liegend über eine Verbindungsgeometrie mit der Trägerhülse verbunden, die aus Domen besteht, die auf dem Umfang der Stirnfläche des Magnetrings angeordnet sind und durch Umformtechniken form- oder kraftschlüssig mit der Trägerhülse verbindbar sind.

Die DE 10 2008 047 466 A1 offenbart eine Magnetbaugruppe mit einem Magnetring, der mittels einer Trägerhülse auf einer Welle angebracht ist, insbesondere für eine Drehmoment- und/oder Drehwinkelsensoranordnung. Der Magnetring ist radial über der Trägerhülse liegend über mindestens ein Zwischenstück mit der Trägerhülse form- und/oder stoffschlüssig verbunden, wobei jeweils Verzahnungs- und/oder Hinterschnittgeometrien am Magnetring derart angeordnet sind, dass diese durch Anbringen des mindestens einen Zwischenstücks als Spritzgussteil vergossen werden.

Die DE 102013 015 452 A1 offenbart ein Verfahren zum Herstellen einer Magneteinheit für eine Sensoreinrichtung zum Erfassen einer einen Rotationszustand einer Lenkwelle eines Kraftfahrzeugs charakterisierenden Messgröße durch Bereitstellen eines ringförmigen Magnetelements aus einem kunststoffgebundenen Magnetmaterial, durch Bereitstellen einer Trägerhülse zum Verbinden der Magneteinheit mit einem Wellenteil der Lenkwelle, und durch Verbinden des Magnetelements mit der Trägerhülse, insbesondere axial nebeneinander über jeweilige axiale Stirnseiten wobei an der Trägerhülse ein Kunststoffelement bereitgestellt wird und das Verbinden umfasst, dass das Kunststoffelement und das Magnetelement (3) stoffschlüssig miteinander verbunden werden.

Es ist eine Aufgabe der Erfindung, eine alternative Magneteinheit bereitzustellen, vorzugsweise eine besonders einfach herzustellende Magneteinheit, insbesondere eine Magneteinheit, mit welcher die Gefahr der Rissbildung im Magnetelement infolge thermischer Spannungen reduziert werden kann, aber gleichzeitig in wenigstens einem Betriebszustand eine in tangentialer Richtung spielfreie, drehfeste Verbindung sichergestellt werden kann.

Diese Aufgabe wird erfindungsgemäß durch eine Magneteinheit, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren und werden im Folgenden näher erläutert.

Eine erfindungsgemäße Magneteinheit für eine Sensoreinrichtung zum Erfassen einer einen Rotationszustand einer Lenkwelle eines Kraftfahrzeugs charakterisierenden Messgröße weist eine Hülse sowie ein mit der Hülse formschlüssig verbundenes Magnetelement auf, wobei die Hülse einen sich in axialer Richtung erstreckenden Hülsen-Verbindungsabschnitt mit einer Innenfläche zur Verbindung mit dem Magnetelement sowie einen buchsenförmigen Hülsen-Befestigungsabschnitt zum Verbinden der Magneteinheit mit einem ersten Teil der Lenkwelle aufweist und das Magnetelement einen sich ebenfalls in axialer Richtung erstreckenden Magnetelement-Verbindungsabschnitt mit einer Außenfläche zur Verbindung mit der Hülse sowie einen magnetisch wirksamen Magnetabschnitt. Dabei sind das Magnetelement und die Hülse mittels wenigstens einer formschlüssigen Verbindung zwischen dem Magnetelement-Verbindungsabschnitt und dem Hülsen-Verbindungsabschnitt verbunden, wobei der Hülsen-Verbindungsabschnitt und der Magnetelement-Verbindungsabschnitt in axialer Richtung überlappend angeordnet sind und die Außenfläche des Magnetelement-Verbindungsabschnitts an der Innenfläche des Hülsen-Verbindungsabschnitts anliegt.

Bei der erfindungsgemäßen Magneteinheit weisen die Hülse und das Magnetelement unterschiedliche thermische Ausdehnungskoeffizienten auf, wobei vorzugsweise der thermische Längen- und/oder Volumenausdehnungskoeffizient des Magnetelementes größer ist als der thermische Längen- und/oder Volumenausdehnungskoeffizient der Hülse, und wobei insbesondere die Hülse und das Magnetelement derart ausgebildet sind, dass die formschlüssige Verbindung in einem Referenzzustand bei einer Referenzumgebungstemperatur in tangentialer Richtung spielfrei ist.

Die Referenzumgebungstemperatur, bei welcher die formschlüssige Verbindung zwischen Magnetelement und Hülse in tangentialer Richtung vorzugsweise spielfrei ist, liegt bevorzugt in einem Temperaturbereich von 15°C bis 30°C, insbesondere zwischen 20°C und 25°C und beträgt vorzugsweise 20°C oder 23°C.

Das Magnetelement einer erfindungsgemäßen Magneteinheit enthält bevorzugt einen mit magnetischen Partikeln gefüllten Kunststoff und/oder besteht daraus, wobei das Magnetelement vorzugsweise in einem Kunststoffspritzgießverfahren hergestellt ist. Besonders bevorzugt ist das Magnetelement dabei durch Anspritzen an die Hülse und/oder durch Umspritzen der Hülse hergestellt worden und auf diese Weise mit der Hülse verbunden worden. Bevorzugt ist das Magnetelement einstückig ausgebildet, d.h. der H-Magnetabschnitt und der Magnetelement-Verbindungsabschnitt sind bevorzugt Teil eines gemeinsamen Bauteils.

Die Hülse einer erfindungsgemäßen Magneteinheit enthält vorzugsweise Metall und/oder ist aus Metall hergestellt, wobei die Hülse vorzugsweise durch Stanzen hergestellt ist. Vorzugsweise ist die Hülse derart ausgebildet, dass sie mittels einer Presspassung auf einem Teil der Lenkwelle befestigt werden kann oder mit dem Teil der Lenkwelle verschweißt werden kann. Alternativ kann die Hülse auch mit dem Teil der Lenkwelle verstemmt oder verklebt werden, wobei sich jedoch eine Verbindung mit der Lenkwelle mittels einer Presspassung oder einer Schweißverbindung als besonders vorteilhaft herausgestellt hat. Bevorzugt ist die Hülse einstückig ausgebildet, d.h. der Hülsen-Befestigungsabschnitt und der Hülsen-Verbindungsabschnitt sind bevorzugt Teil eines gemeinsamen Bauteils.

Weisen die Hülse und das Magnetelement unterschiedliche thermische Ausdehnungskoeffizienten auf, führt eine Temperaturerhöhung zu einer stärkeren Weisen die Hülse und das Magnetelement unterschiedliche thermische Ausdehnungskoeffizienten auf, führt eine Temperaturerhöhung zu einer stärkeren Ausdehnung des Magnetelementes im Vergleich zur Hülse. Durch die erfindungsgemäße Anbindung des Magnetelementes an der Innenseite der Hülse, drückt das Magnetelement, insbesondere der Magnetelement-Verbindungsabschnitt, somit zwar mit zunehmender Temperaturerhöhung in radialer Richtung zunehmenvon innen an die Hülse, insbesondere an den Hülsen-Verbindungsabschnitt. Dabei entstehen im Magnetelement-Verbindungsabschnitt jedoch hauptsächlich Druckspannungen, vor allem in Umfangsrichtung, welche jedoch deutlich weniger kritisch in Bezug auf die Entstehung von Rissen im Magnetelement sind als beispielsweise in Umfangsrichtung wirkende Zugspannungen. Denn insbesondere wenn Zugspannungen in Umfangsrichtung auf strukturschwache, in axialer Richtung verlaufende Bereiche im Magnetelement wirken, wie beispielsweise auf axial verlaufende Bindenähte, besteht die Gefahr einer Rissbildung. Da wie bereits beschrieben, bei einer erfindungsgemäßen Magneteinheit vorrangig Druckspannungen in Umfangsrichtung entstehen, kann diese Gefahr somit deutlich reduziert werden.

Der außen um den Magnetelement-Verbindungsabschnitt herum angeordnete Hülsen-Verbindungsabschnitt verhindert ferner, insbesondere wenn er rotationssymmetrisch ausgebildet ist, ein Ausbeulen des Magnetelementes in diesem Bereich, welches sich negativ auf den magnetisch wirkenden Magnetabschnitt und damit auf ein mittels der Magneteinheit erzeugtes Sensorsignal auswirken könnte. Demnach ist die Hülse bevorzugt zumindest im Bereich des Hülsen-Verbindungsabschnitts in Umfangsrichtung vollständig geschlossen ausgebildet.

Der Magnetabschnitt kann bei einer erfindungsgemäßen Magneteinheit hülsen- oder ringförmig ausgebildet sein, d.h. ebenfalls in Umfangsrichtung vollständig geschlossen sein. Er kann aber auch segmentiert ausgebildet sein. Insbesondere, wenn er segmentiert ausgebildet ist, ist es vorteilhaft, wenn der Magnetabschnitt derart ausgebildet ist, dass er ähnlich wie ein hülsen- oder ringförmig ausgebildeter Magnetabschnitt bzw. wie ein üblicher, aus dem Stand der Technik bekannter Ringmagnet wirkt.

Bevorzugt sind der Magnetabschnitt und/oder der Magnetelement-Verbindungsabschnitt konzentrisch zum Hülsen-Befestigungsabschnitt und/oder zum Hülsen-Verbindungsabschnitt angeordnet. Besonders bevorzugt ist das gesamte Magnetelement konzentrisch zur gesamten Hülse angeordnet.

Bevorzugt sind die Hülse und das Magnetelement ferner nicht nur mittels einer einzigen formschlüssigen Verbindung miteinander verbunden, sondern besonders bevorzugt weist die Magneteinheit mehrere in Umfangsrichtung verteilt angeordnete, insbesondere in Umfangsrichtung gleichmäßig verteilt angeordnete, formschlüssige Verbindungen zwischen Hülse und Magnetelement auf.

Wenigstens eine formschlüssige Verbindung ist vorzugsweise durch eine Ausnehmung und einen korrespondierend zur Ausnehmung ausgebildeten Vorsprung gebildet, der in die Ausnehmung eingreift, wobei vorzugsweise die Hülse wenigstens eine Ausnehmung aufweist und das Magnetelement wenigstens einen korrespondierend zur Ausnehmung der Hülse ausgebildeten Vorsprung der in die Ausnehmung der Hülse eingreift. Vorzugsweise weist die Hülse dabei in Umfangsrichtung mehrere, insbesondere gleichmäßig verteilt angeordnete Ausnehmungen auf und das Magnetelement entsprechend viele korrespondierend zu den Ausnehmungen in der Hülse angeordnete und ausgebildete Vorsprünge auf, wobei vorzugsweise jeweils ein Vorsprung des Magnetelementes in eine zugehörige Ausnehmung in der Hülse eingreift und das Magnetelement formschlüssig mit der Hülse verbindet.

Selbstverständlich kann alternativ auch das Magnetelement eine oder mehrere Ausnehmungen aufweisen und die Hülse einen oder mehrere korrespondierend zur Ausnehmung im Magnetelement ausgebildete Vorsprünge, die in die Ausnehmungen des Magnetelements eingreifen.

Durch die formschlüssige Verbindung kann bei einer Temperaturabsenkung und einer infolgedessen auftretenden, stärkeren Schrumpfung des Magnetelementes, insbesondere in radialer Richtung, das Lösen der drehfesten Verbindung zwischen dem Magnetelement und der Hülse verhindert werden, sofern wenigstens eine der formschlüssigen Verbindungen geometrisch entsprechend ausgestaltet ist.

Dazu ist in einer weiteren vorteilhaften Ausgestaltung einer erfindungsgemäßen Magneteinheit eine Wandstärke des Hülsen-Verbindungsabschnitts in radialer Richtung, vorzugsweise über den gesamten Umfang des Hülsen-Verbindungsabschnitts, bevorzugt größer als eine, in einem für die Magneteinheit vorgesehenen, definierten Betriebstemperaturbereich maximal auftretende Differenz einer thermisch bedingten Längenänderung, insbesondere in radialer Richtung, von Ausnehmung und Vorsprung. Dadurch kann verhindert werden, dass der Vorsprung, insbesondere infolge einer thermisch bedingten Schrumpfung, aus der Ausnehmung rutscht.

In einer weiteren vorteilhaften Ausgestaltung einer erfindungsgemäßen Magneteinheit ist wenigstens eine Ausnehmung im Hülsen-Verbindungsabschnitt eine umlaufend geschlossene Ausnehmung, vorzugsweise eine kreisrunde Öffnung, insbesondere eine Bohrung.

Die Ausnehmung kann aber alternativ jeweils auch ein gestanztes Loch, oder ein anderweitig gefertigtes Loch oder ein Langloch oder eine sonstige Geometrie aufweisen. Bevorzugt weist eine erfindungsgemäße Magneteinheit vier Ausnehmungen auf, wobei diese vorzugsweise in Umfangsrichtung verteilt angeordnet sind, insbesondere gleichmäßig verteilt.

In einer weiteren vorteilhaften Ausgestaltung einer erfindungsgemäßen Magneteinheit ist wenigstens ein Vorsprung des Magnetelement-Verbindungsabschnitts, der in eine Ausnehmung eingreift, stiftförmig ausgebildet und erstreckt sich vorzugsweise in radialer Richtung nach außen. Denkbar sind selbstverständlich jeweils auch andere geometrische Ausgestaltungen für den Vorsprung, wobei vorzugsweise der Vorsprung bzw. die formschlüssige Verbindung derart ausgebildet ist, dass bei einer Temperaturänderung möglichst geringe thermische Spannungen im Bereich der formschlüssigen Verbindung in das Magnetelement induziert werden.

Ist bei einer erfindungsgemäßen Magneteinheit die Hülse, mit der die Magneteinheit an der Lenkwelle befestigt werden kann, über ihre ganze Länge zylindrisch ausgebildet, bedeutet dies aufgrund der erfindungsgemäßen Anbindung des Magnetelementes an der Innenseite der Hülse, dass eine derartige Magneteinheit nur für Lenkwellen geeignet ist, die für die Befestigung der Magneteinheit auf der Lenkwelle einen Befestigungsabschnitt aufweisen, der gegenüber dem Bereich, in welchem sich in einem funktionsgemäßen Verbindungszustand von Lenkwelle und Magneteinheit der Magnetabschnitt befindet, einen vergrößertem Durchmesser aufweist, da der Innendurchmesser der Hülse, insbesondere des Hülsen-Verbindungsabschnitts, größer als der Innendurchmesser des Magnetelementes ist, insbesondere des Magnetelement-Verbindungsabschnitts.

Um eine erfindungsgemäße Magneteinheit auch auf einer Lenkwelle mit einem über ihre Länge konstanten Durchmesser befestigen zu können, ist in einer weiteren vorteilhaften Ausgestaltung einer erfindungsgemäßen Magneteinheit die Hülse gekröpft ausgebildet, vorzugsweise derart, dass der Hülsen-Verbindungsabschnitt gegenüber dem Hülsen-Befestigungsabschnitt in radialer Richtung versetzt ist, wobei der Hülsen-Verbindungsabschnitt insbesondere gegenüber dem Hülsen-Befestigungsabschnitt in radialer Richtung nach außen versetzt angeordnet ist. Dabei ist der Hülsen-Verbindungsabschnitt vorzugsweise mittels eines sich nach außen erstreckenden, insbesondere sich in radialer Richtung und/oder im Wesentlichen in radialer Richtung erstreckenden Kröpfungsabschnitts mit dem Hülsen-Verbindungsabschnitt verbunden.

Dadurch kann, trotz der Anbindung des Magnetelementes an der Innenseite der Hülse, auf einfache Art und Weise eine Magneteinheit bereitgestellt werden, bei welcher der Innendurchmesser des Magnetelements größer als der Innendurchmesser des Hülsen-Verbindungsabschnitts ausgestaltet werden kann, so dass die Magneteinheit auch auf Lenkwellen mit konstantem Durchmesser befestigt werden kann.

In einer vorteilhaften Weiterbildung einer erfindungsgemäßen Magneteinheit ist der Magnetelement-Verbindungsabschnitt dabei in axialer Richtung mit einer vom Magnetabschnitt abgewandten Seitenfläche am nach außen erstreckenden Kröpfungsabschnitt abgestützt.

Dies hat den Vorteil, dass der sich nach außen erstreckende Bereich der Kröpfung, insbesondere der Kröpfungsabschnitt, bei der Herstellung der Magneteinheit, insbesondere während des Spritzgießvorgangs, abdichtend wirkt bzw. als Abdichtung in axialer Richtung genutzt werden kann und keine zusätzliche Abdichtmaßnahmen diesbezüglich erforderlich sind.

Ist die Hülse hingegen über ihre gesamte Länge zylindrisch ausgebildet, muss an der Innenseite des Hülsen-Verbindungsabschnitts abgedichtet werden. Dies erfordert im Verbindungsbereich jedoch eine entsprechend geringe Toleranzklasse, um eine Überspritzung zu vermeiden.

In einer weiteren vorteilhaften Ausgestaltung einer erfindungsgemäßen Magneteinheit ist die Hülse mit ihrer vom Hülsen-Befestigungsabschnitt abgewandten Fläche des Hülsen-Verbindungsabschnitts an einer, sich in radialer Richtung erstreckenden Seitenfläche des Magnetelementes abgestützt, vorzugsweise an der sich in radialer Richtung erstreckenden Seitenfläche des magnetisch wirksamen Magnetabschnitts.

Dadurch kann eine verbesserte Abstützung axialer Kräfte zwischen Hülse und Magnetelement erreicht werden. Allerdings kann es bei einer ungünstigen, geometrischen Ausgestaltung der Magneteinheit, vor allem bei einer Temperaturerhöhung, in diesem Bereich zu schädlichen, thermisch induzierten Spannungen im Magnetelement, insbesondere im Magnetelement-Verbindungsabschnitt kommen.

Um dies zu vermeiden ist in einer weiteren vorteilhaften Ausgestaltung einer erfindungsgemäßen Magneteinheit ein Abstand in axialer Richtung zwischen der Seitenfläche des Magnetelementes, an welchem die Hülse mit ihrer vom Hülsen-Befestigungsabschnitt abgewandten Seitenfläche des Hülsen-Verbindungsabschnitts abgestützt ist, und einem dieser Seitenfläche zugewandten, äußeren Rand wenigstens einer Ausnehmung im Hülsen-Verbindungsabschnitt wenigstens so klein, dass eine in einem für die Magneteinheit vorgesehenen, definierten Betriebstemperaturbereich maximal auftretende, thermisch bedingte Materialdehnung eines Magnetmaterials, aus dem das Magnetelement hergestellt ist, kleiner ist als die mittlere Bruchdehnung des Magnetmaterials.

Eine erfindungsgemäße Sensoreinrichtung zum Erfassen einer einen Rotationszustand einer Lenkwelle eines Kraftfahrzeugs charakterisierenden Messgröße weist eine erfindungsgemäße Magneteinheit auf.

Ein erfindungsgemäßes Kraftfahrzeug mit einer Sensoreinrichtung weist eine erfindungsgemäße Sensoreinrichtung mit einer erfindungsgemäßen Magneteinheit auf.

Die mit Bezug auf die Magneteinheit vorgestellten vorteilhaften Ausgestaltungen und deren Vorteile gelten entsprechend auch für eine erfindungsgemäße Sensoreinrichtung sowie für ein erfindungsgemäßes Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand zweier, vorteilhafter Ausführungsbeispiele unter Bezugnahme auf die beigefügten Zeichnungen näher erläutert, wobei Bauteile mit gleicher Funktion zugunsten eines einfacheren Verständnisses gleiche Bezugszeichen aufweisen, auch wenn sie sich in ihrer konstruktiven Ausgestaltung unterscheiden.

Es zeigen:

Fig. 1    ein erstes Ausführungsbeispiel einer erfindungsgemäßen Magneteinheit im Längsschnitt,

Fig. 2a    ein zweites Ausführungsbeispiel einer erfindungsgemäßen Magneteinheit, ebenfalls im Längsschnitt,

Fig. 2b    die erfindungsgemäße Magneteinheit aus Fig. 2a in perspektivischer Darstellung,

Fig. 2c    eine Hülse der erfindungsgemäßen Magneteinheit aus den Fig. 2a und 2b in perspektivischer Einzelteildarstellung und

Fig. 2d    die erfindungsgemäße Magneteinheit aus den Fig. 2a bis 2c nochmals in Längsschnitt wie in Fig. 2a, jedoch mit ergänzenden Bezugszeichen.

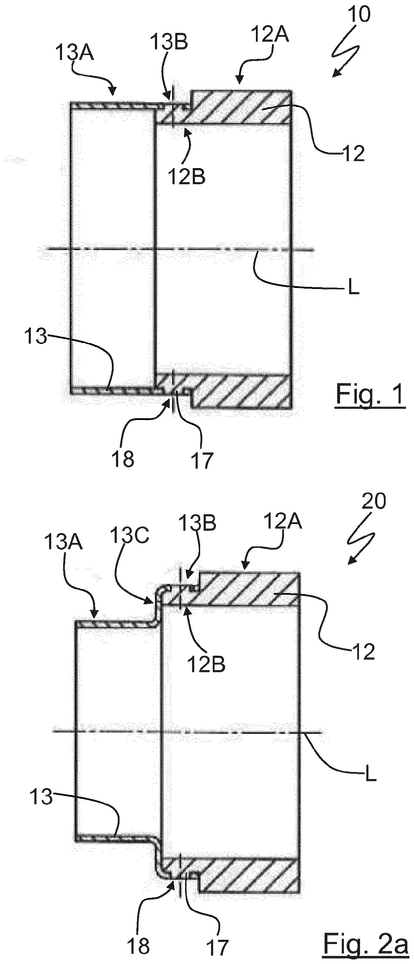

Fig. 1 zeigt ein erstes Ausführungsbeispiel einer erfindungsgemäßen Magneteinheit 10, wobei die Magneteinheit 10 eine in Umfangsrichtung geschlossene Hülse 13 sowie ein mit der Hülse 13 formschlüssig verbundenes Magnetelement 12 in Form eines ebenfalls in Umfangsrichtung geschlossenen Ringmagneten aufweist. Die Hülse 13 weist dabei einen Hülsen-Verbindungsabschnitt 13B mit einer Innenfläche zur Verbindung mit dem Magnetelement 12 sowie einen buchsenförmigen Hülsen-Befestigungsabschnitt 13A zum Verbinden der Magneteinheit 10 mit einem ersten Teil einer Lenkwelle auf.

Das Magnetelement 12 weist entsprechend einen Magnetelement-Verbindungsabschnitt 12A mit einer Außenfläche auf, der an der Innenfläche des Hülsen-Verbindungsabschnitts 13B anliegt und über welchen das Magnetelement 12 mit der Hülse 13 formschlüssig verbunden ist. Des Weiteren weist das Magnetelement 12 einen magnetisch wirksamen Magnetabschnitt 12A auf, mittels welchem bei einer funktionsgemäßen Verwendung der Magneteinheit 10 ein Sensorsignal erzeugt werden kann.

Der Hülsen-Verbindungsabschnitt 13B und der Magnetelement-Verbindungsabschnitt 12B erstrecken sich dabei jeweils in axialer Richtung, d.h. parallel zu einer Rotationsachse L der Magneteinheit 10, und sind in axialer Richtung überlappend angeordnet.

Bei diesem Ausführungsbeispiel sind das Magnetelement 12 und die Hülse 13 mittels acht formschlüssiger Verbindungen verbunden, wobei die Hülse 13 dazu in ihrem Hülsen-Verbindungsabschnitt 13B jeweils acht in Umfangsrichtung gleichmäßig verteilt angeordnete Ausnehmungen 18 in Form von Bohrungen aufweist und das Magnetelement 12 jeweils acht, stiftartige, sich in radialer Richtung nach außen erstreckende am Magnetelement-Verbindungsabschnitt 12B angeordnete und korrespondierend zu den Ausnehmungen 18 im Hülsen-Verbindungsabschnitt 13B ausgebildete Vorsprünge 17.

Die Vorsprünge 17 greifen dabei derart in die Ausnehmungen 18 ein, dass das Magnetelement 12 sowohl jeweils zu beiden Seiten in axialer und in tangentialer Richtung, d.h. in Umfangsrichtung, formschlüssig mit der Hülse 13 verbunden ist. In radialer Richtung hingegen wirkt die formschlüssige Verbindung nur derart, dass eine Bewegung des Magnetelement-Verbindungsabschnitts 12B nach außen verhindert wird, nicht jedoch nach innen.

Die Hülse 13 stützt sich ferner mit ihrer vom Hülsen-Befestigungsabschnitt 13A abgewandten Fläche des Hülsen-Verbindungsabschnitts 13B an einer, sich in radialer Richtung erstreckenden Seitenfläche des magnetisch wirksamen Magnetabschnitts 12A des Magnetelementes 12 ab, wodurch eine verbesserte Abstützung axialer Kräfte zwischen der Hülse 13 und dem Magnetelement 12 erreicht werden kann.

Die Hülse 13 der erfindungsgemäßen Magneteinheit 10 besteht bei diesem Ausführungsbeispiel aus Metall und ist durch Stanzen hergestellt. Die Hülse 13 ist dabei derart ausgebildet, dass sie mittels einer Presspassung auf einem Teil der Lenkwelle befestigt werden kann.

Das Magnetelement 12 ist aus einem mit magnetischen Partikeln gefüllten Kunststoff in einem Kunststoffspritzgießverfahren hergestellt worden, wobei das Magnetelement 12 dabei an die Hülse, insbesondere den Hülsen-Verbindungsabschnitt 13B, angespritzt worden ist.

Das Magnetelement 12 und die Hülse 13 weisen infolge ihrer unterschiedlichen Werkstoffe unterschiedliche thermische Ausdehnungskoeffizienten auf, wobei der thermische Längen- und/oder Volumenausdehnungskoeffizient des Magnetelementes 12 größer ist als der thermische Längen- und/oder Volumenausdehnungskoeffizient der Hülse, so dass Temperaturänderungen zu unterschiedlichen Ausdehnungen von Magnetelement 12 und Hülse 13 führen.

In Fig. 1 ist die erfindungsgemäße Magneteinheit 10 zum besseren Verständnis in einem Referenzzustand bei einer Referenztemperatur von 20 °C dargestellt, in welchem die formschlüssigen Verbindungen zwischen dem Magnetelement 12 und der Hülse 13 in tangentialer Richtung spielfrei sind. Damit sind die Hülse 13 und das Magnetelement 12 im Referenzzustand vollständig drehfest, d.h. schlupffrei, miteinander verbunden.

Infolge einer Temperaturerhöhung kommt es zu einer stärkeren Ausdehnung des Magnetelementes 12 im Vergleich zur Hülse 13. Dabei dehnen sich die stiftartigen Vorsprünge 17 stärker als die Ausnehmungen 18 aus, wodurch die Verbindungsfestigkeit der formschlüssigen Verbindungen ansteigt. Durch die erfindungsgemäße Anbindung des Magnetelementes 12 an der Innenseite der Hülse 13, drückt das Magnetelement 12, insbesondere der Magnetelement-Verbindungsabschnitt 12B, außerdem mit zunehmender Temperaturerhöhung in radialer Richtung stärker von innen an die Hülse 13, insbesondere an den Hülsen-Verbindungsabschnitt 13B, so dass zwischen der Hülse 13 und dem Magnetelement 12 wirkende Reibkräfte ebenfalls zunehmen und die Verbindungsfestigkeit noch weiter erhöhen.

Im Magnetelement 12 entstehen dabei zwar Spannungen. Aber durch die erfindungsgemäße Anbindung des Magnetelementes 12 an der Innenseite der Hülse 13 entstehen, vor allem in Umfangsrichtung im Magnetelement-Verbindungsabschnitt 12B, hauptsächlich Druckspannungen, welche deutlich weniger kritisch in Bezug auf die Entstehung von Rissen im Magnetelement 12 sind als beispielsweise in Umfangsrichtung wirkende Zugspannungen. Somit kann mit einer erfindungsgemäßen Magneteinheit 10 das Lösen der Verbindung zwischen Magnetelement 12 und Hülse 13 infolge einer Temperaturerhöhung vermieden werden und die Gefahr einer Rissbildung im Magnetelement 10 deutlich reduziert werden.

Der außen um den Magnetelement-Verbindungsabschnitt 12B angeordnete Hülsen-Verbindungsabschnitt 13B verhindert ferner, insbesondere wenn er rotationssymmetrisch ausgebildet ist wie in diesem Fall, ein Ausbeulen des Magnetelementes 12 in diesem Bereich, welches sich negativ auf den magnetisch wirkenden Magnetabschnitt 12A und damit auf ein mittels der Magneteinheit 10 erzeugtes Sensorsignal auswirken könnte.

Bei einer Temperaturabsenkung hingegen schrumpft das Magnetelement 12 stärker als die Hülse 13, so dass sich im Bereich des Hülsen-Verbindungsabschnitts 13B das Magnetelement 12 von der Innenfläche der Hülse 13 löst. Aufgrund der vorhandenen formschlüssigen Verbindungen kann jedoch weiterhin zwischen der Hülse 13 und dem Magnetelement 12 sowohl in axialer Richtung, als auch in Umfangsrichtung eine Kraft bzw. ein Drehmoment übertragen werden.

Dies funktioniert allerdings nur, wenn sichergestellt ist, dass die Vorsprünge 17 des Magnetelementes 12 trotz der Schrumpfung des Magnetelementes 12 noch ausreichend weit in die Ausnehmungen 18 der Hülse 13 eingreifen. Um dies sicherzustellen, ist die beschriebene erfindungsgemäße Magneteinheit 10 derart ausgestaltet, dass eine Wandstärke des Hülsen-Verbindungsabschnitts 13B größer als die Differenz der bei einer Temperaturabsenkung maximal auftretenden thermisch bedingten Längenänderung von Hülse 13 und Magnetelement 12 im Verbindungsabschnitt ist, wobei die Wandstärke des Hülsen-Verbindungsabschnitts 13B dabei über den gesamten Umfang des Hülsen-Verbindungsabschnitts 13B größer ist als die bei einer Temperaturabsenkung maximal auftretende Differenz einer thermisch bedingten Längenänderung von den Ausnehmungen 18 und den Vorsprüngen 17.

Für eine erfindungsgemäße Magneteinheit 10 ergibt sich somit beispielsweise für eine im Betrieb maximal mögliche Temperaturabsenkung von 60 K, ausgehend vom Referenzzustand, mit einer Differenz der thermischen Ausdehnungskoeffizienten von $30 \times 10^{-6}$ $K^{-1}$ und mit einem Innendurchmesser des Hülsen-Verbindungsabschnitts 13B von 30 mm, dass die Wandstärke der Hülse 13 im Bereich der Hülsen-Verbindungsabschnitts 13B größer als 0,054 mm sein muss, wobei sich eine Mindest-Wandstärke aus dem Produkt der Differenz der thermischen Ausdehnungskoeffizienten mit dem Innendurchmesser des Hülsen-Verbindungsabschnitts 13B und dem Wert der Temperaturabsenkung ergibt, d.h. es gilt:

$$\text{Mindestwandstärke} > 30 \times 10^{-6} \ K^{-1} \times 30 \ mm \times 60 \ K = 0,054 \ mm$$

Mit anderen Worten ausgedrückt heißt das, dass bei einer erfindungsgemäßen Magneteinheit 10 für eine im Betrieb beispielsweise maximal mögliche Temperaturabsenkung von 60 K, ausgehend vom Referenzzustand, die Wandstärke der Hülse 13 im Bereich der Hülsen-Verbindungsabschnitts 13B größer als 0,054 mm sein muss, um ein Lösen der formschlüssigen Verbindung bei einer Temperaturabsenkung um 60 K zu vermeiden, wenn die Differenz der thermischen Ausdehnungskoeffizienten $30 \times 10^{-6}$ $K^{-1}$ beträgt und der Innendurchmesser des Hülsen-Verbindungsabschnitts 13B 30 mm, da sich in diesem Fall bei einer Temperaturabsenkung von 60 K eine relative Schrumpfung von 0,054 mm nach innen einstellt. Selbstverständlich können auch andere Kombinationen von Geometrien und Materialeigenschaften zum gleichen Ergebnis führen.

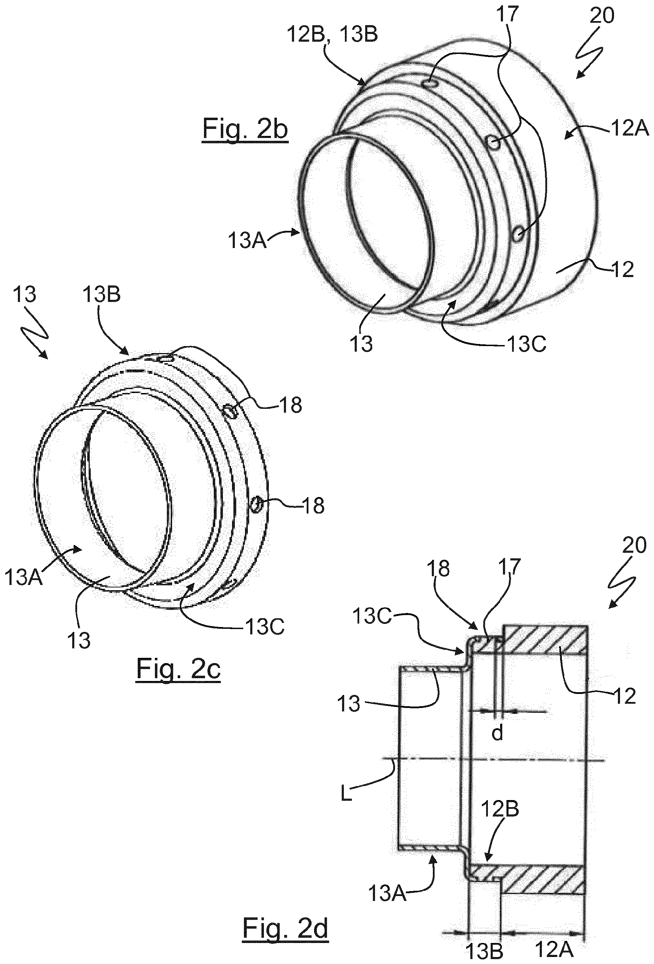

Fig. 2a zeigt ein zweites Ausführungsbeispiel einer erfindungsgemäßen Magneteinheit 20, ebenfalls in einem Längsschnitt, wobei sich diese erfindungsgemäße Magneteinheit 20 lediglich darin von der zuvor beschriebenen erfindungsgemäßen Magneteinheit 10 unterscheidet, dass die Hülse 13 nicht über ihre gesamte Länge zylindrisch ausgebildet ist, sondern gekröpft ist, wobei der Hülsen-Verbindungsabschnitt 13B in radialer Richtung nach außen versetzt gegenüber dem Hülsen-Befestigungsabschnitt 13A angeordnet ist und mittels eines sich in radialer Richtung, insbesondere exakt in radialer Richtung, erstreckenden Kröpfungsabschnitts 13C mit dem Hülsen-Befestigungsabschnitt 13A verbunden ist. Dies ist auch anhand der Fig. 2b und 2c gut erkennbar, wobei Fig. 2b die erfindungsgemäße Magneteinheit aus Fig. 2a in perspektivischer Darstellung zeigt und Fig. 2c die Hülse 13 in perspektivischer Einzelteildarstellung.

Gegenüber der vorbeschriebenen erfindungsgemäßen Magneteinheit 10, welche eine zylindrische Hülse 13 aufweist, hat die zweite, erfindungsgemäße Magneteinheit 20 aufgrund der gekröpften Hülse 13 jedoch den Vorteil, dass diese Magneteinheit 20 auch auf Lenkwellen mit einem über ihre Länge konstanten Durchmesser befestigt werden kann, da durch die gekröpfte Ausgestaltung der Hülse 13 das Magnetelement 12 derart ausgestaltet werden kann, dass der Innendurchmesser des Magnetelementes 12 größer als der Innendurchmesser des Hülsen-Befestigungsabschnitts 13A ausgebildet werden kann.

Ein weiterer Vorteil ist, dass der sich radial nach außen erstreckende Bereich der Kröpfung, insbesondere der Kröpfungsabschnitt 13C, bei der Herstellung der Magneteinheit 20, insbesondere während des Spritzgießvorgangs, abdichtend wirkt bzw. als Abdichtung in axialer Richtung genutzt werden kann und keine zusätzliche Abdichtmaßnahmen diesbezüglich erforderlich sind oder eine geringere Toleranzklasse, um eine Überspritzung zu vermeiden, wie dies bei einer zylindrischen Hülse 13 der Fall ist. D.h. das Magnetmaterial kann bei einer gekröpften Hülse 13, wie bei der zweiten, beschriebenen erfindungsgemäßen Magneteinheit 20, bis an den Kröpfungsabschnitt 13C herangespritzt werden.

Die Hülse 13 der erfindungsgemäßen Magneteinheit 20 ist, wie bei dem zuvor beschriebenen Ausführungsbeispiel einer erfindungsgemäßen Magneteinheit 10, zugunsten einer verbesserten Abstützung axialer Kräfte ebenfalls mit ihrer vom Hülsen-Befestigungsabschnitt 13A abgewandten Fläche des Hülsen-Verbindungsabschnitts 13B an einer, sich in radialer Richtung erstreckenden Seitenfläche des magnetisch wirksamen Magnetabschnitts 12A des Magnetelementes 12 abgestützt. Bei einer ungünstigen, geometrischen Ausgestaltung der Magneteinheit 10 kann es bei einer Temperaturabsenkung infolgedessen jedoch bei beiden beschriebenen, erfindungsgemäßen Magneteinheiten 10 und 20 jeweils zu schädlichen, thermisch induzierten Zugspannungen im Magnetelement 12 in diesem Bereich kommen, da die Schrumpfung des Magnetelements 12 durch den Hülsen-Verbindungsabschnitt 13B in diesem Bereich behindert wird.

Um dies zu vermeiden, ist der Abstand d zwischen der Seitenfläche des Magnetabschnitts 12A und den dieser Seitenfläche zugewandten äußeren Rändern der Ausnehmungen 18, s. Fig. 2d, dabei in vorteilhafterweise so klein gewählt, dass sich die thermisch bedingte Volumenänderungen, insbesondere die thermisch bedingte Schrumpfung, nicht schädlich auswirkt, insbesondere derart, dass eine Rissbildung im Magnetelement 12 vermieden wird. Dazu darf die sich infolge einer Temperaturabsenkung einstellende Dehnung im Magnetmaterial nicht größer als die mittlere Bruchdehnung des Magnetmaterials sein, wobei sich die resultierende Dehnung aus dem Verhältnis der resultierenden Längenänderung zum Abstand d ergibt und die resultierende Längenänderung aus dem Produkt der Differenz der thermischen Ausdehnungskoeffizienten mit dem Abstand d und dem Wert der Temperaturabsenkung.

Dies kann bei einer erfindungsgemäßen Magneteinheit 10, 20 bei einer angenommenen, ausgehend vom Referenzzustand, maximal auftretenden Temperaturabsenkung von 60 K, einer Differenz der Wärmeausdehnungskoeffizienten von $30 \times 10^{-6}$ K$^{-1}$ und einer mittleren Bruchdehnung des Magnetmaterials, aus dem das Magnetelement 12 hergestellt ist, von 1,6% beispielsweise mit einem Abstand von d = 2 mm erreicht werden.

Denn bei einer Temperaturminderung von 60 K, einer Differenz der Wärmeausdehnungskoeffizienten von $30 \times 10^{-6}$ K$^{-1}$ und einem Abstand von d = 2 mm ergibt sich gemäß

$$\text{resultierende Längenänderung} = 30 \times 10^{-6} \text{ K}^{-1} \times 2 \text{ mm} \times 60 \text{ K} = 0{,}004 \text{ mm}$$

eine resultierende Längenänderung in axialer Richtung von 0,004 mm. Bezogen auf den Abstand von d = 2 mm zwischen Ausnehmung 18 und der Seitenfläche des Magnetabschnitts 12A ergibt sich damit gemäß

$$\text{Dehnung Magnetmaterial} = \text{resultierende Längenänderung} / d = 0{,}18\%$$

somit eine Dehnung des Magnetmaterials von 0,18%. Bei einer mittleren Bruchdehnung von 1,6% ist die infolge einer Temperaturabsenkung um 60 K auftretende Dehnung des Magnetelementes 12 mit 0,18% deutlich geringer als die mittlere Bruchdehnung des Magnetmaterials von 1,6% und eine Rissbildung wird vermieden. Selbstverständlich können auch andere Geometrien und Materialeigenschaften derart miteinander kombiniert werden, dass sie zum gleichen Ergebnis führen.

Natürlich ist Vielzahl konstruktiver Abwandlungen zu den erläuterten Ausführungsbeispielen möglich, ohne den Inhalt der Patentansprüche zu verlassen.

**Patentansprüche**

1. Magneteinheit (10, 20) für eine Sensoreinrichtung zum Erfassen einer einen Rotationszustand einer Lenkwelle eines Kraftfahrzeugs charakterisierenden Messgröße,

- wobei die Magneteinheit (10, 20) eine Hülse (13) sowie ein mit der Hülse (13) formschlüssig verbundenes Magnetelement (12) aufweist,
- wobei die Hülse (13) einen sich in axialer Richtung erstreckenden Hülsen-Verbindungsabschnitt (13B) mit einer Innenfläche zur Verbindung mit dem Magnetelement (12) sowie einen buchsenförmigen Hülsen-Befestigungsabschnitt (13A) zum Verbinden der Magneteinheit (10, 20) mit einem ersten Teil der Lenkwelle aufweist,
- wobei das Magnetelement (12) einen sich in axialer Richtung erstreckenden Magnetelement-Verbindungsabschnitt (12B) mit einer Außenfläche zur Verbindung mit der Hülse (13) sowie einen magnetisch wirksamen Magnetabschnitt (12A) aufweist,
- wobei das Magnetelement (12) und die Hülse (13) mittels wenigstens einer formschlüssigen Verbindung zwischen dem Magnetelement-Verbindungsabschnitt (12B) und dem Hülsen-Verbindungsabschnitt (13B) verbunden sind,
- wobei der Hülsen-Verbindungsabschnitt (13B) und der Magnetelement-Verbindungsabschnitt (12B) in axialer Richtung überlappend angeordnet sind und die Außenfläche des Magnetelement-Verbindungsabschnitts (12B) an der Innenfläche des Hülsen-Verbindungsabschnitts (13B) anliegt und
- wobei die Hülse (13) und das Magnetelement (12) unterschiedliche thermische Ausdehnungskoeffizienten aufweisen, wobei vorzugsweise der thermische Längen- und/oder Volumenausdehnungskoeffizient des Magnetelementes größer ist als der thermische Längen- und/oder Volumenausdehnungskoeffizient der Hülse, und wobei insbesondere die Hülse (13) und das Magnetelement (12) derart ausgebildet sind, dass die formschlüssige Verbindung in einem Referenzzustand bei einer Referenzumgebungstemperatur in tangentialer Richtung spielfrei ist.

2. Magneteinheit (10, 20) nach Anspruch 1, **dadurch gekennzeichnet, dass** der Hülsen-Verbindungsabschnitt (13B) vorzugsweise wenigstens eine Ausnehmung (18) aufweist und der Magnetelement-Verbindungsabschnitt (12B) wenigstens einen, korrespondierend zur Ausnehmung (18) im Hülsen-Verbindungsabschnitt (13B) ausgebildeten Vorsprung (17) aufweist, der in die Ausnehmung (18) des Hülsen-Verbindungsabschnitts (13B) eingreift und mit der Ausnehmung (18) des Hülsen-Verbindungsabschnitts (13B) eine formschlüssige Verbindung bildet.

3. Magneteinheit (10, 20) nach wenigstens einem der vorhergehenden Ansprüche, **dadurch gekennzeichnet, dass** eine Wandstärke des Hülsen-Verbindungsabschnitts (13B) in radialer Richtung, vorzugsweise über den gesamten Umfang des Hülsen-Verbindungsabschnitts (13B), größer als eine, in einem für die Magneteinheit (10, 20) vorgesehenen, definierten Betriebstemperaturbereich maximal auftretende Differenz einer thermisch bedingten Längenänderung, insbesondere in radialer Richtung, von Ausnehmung (18) und Vorsprung (17) ist.

4. Magneteinheit (10, 20) nach wenigstens einem der vorgenannten Ansprüche, **dadurch gekennzeichnet, dass** wenigstens eine Ausnehmung im Hülsen-Verbindungsabschnitt (13B) eine umlaufend geschlossene Ausnehmung (18) ist, vorzugsweise eine kreisrunde Öffnung, insbesondere eine Bohrung.

5. Magneteinheit (10, 20) nach wenigstens einem der vorgenannten Ansprüche, **dadurch gekennzeichnet, dass** wenigstens ein Vorsprung (17) des Magnetelement-Verbindungsabschnitts, der in eine Ausnehmung (18) eingreift, stiftförmig ausgebildet ist und sich vorzugsweise in radialer Richtung nach außen erstreckt.

6. Magneteinheit (10, 20) nach wenigstens einem der vorgenannten Ansprüche, **dadurch gekennzeichnet, dass** die Hülse (13) gekröpft ausgebildet ist, vorzugsweise derart, dass der Hülsen-Verbindungsabschnitt (13B) gegenüber dem Hülsen-Befestigungsabschnitt (13A) in radialer Richtung versetzt ist, wobei insbesondere der Hülsen-Verbindungsabschnitt (13B) gegenüber dem Hülsen-Befestigungsabschnitt (13A) in radialer Richtung nach außen versetzt angeordnet ist.

7. Magneteinheit (10, 20) nach Anspruch 6, **dadurch gekennzeichnet, dass** der Magnetelement-Verbindungsabschnitt (12B) in axialer Richtung an einem sich nach außen erstreckenden Kröpfungsabschnitt (13C) der Hülse (13) abgestützt ist.

8. Magneteinheit (10, 20) nach Anspruch 6 oder 7, **dadurch gekennzeichnet, dass** die Hülse (13) mit ihrer vom Hülsen-Befestigungsabschnitt (13A9 abgewandten Fläche des Hülsen-Verbindungsabschnitts (13B) an einer, sich in radialer Richtung erstreckenden Seitenfläche des Magnetelementes (12) abgestützt ist, vorzugsweise an der sich in radialer Richtung erstreckenden Seitenfläche des magnetisch wirksamen Magnetabschnitts (12A).

9. Magneteinheit (10, 20) nach wenigstens einem der vorgenannten Ansprüche, **dadurch gekennzeichnet, dass** ein Abstand (d) in axialer Richtung zwischen der Seitenfläche des Magnetelementes (12), an welchem die Hülse (13) mit ihrer vom Hülsen-Befestigungsabschnitt (13A) abgewandten Seitenfläche des Hülsen-Verbindungsabschnitts (13B) abgestützt ist, und einem dieser Seitenfläche zugewandten, äußeren Rand wenigstens einer Ausnehmung (18) im Hülsen-Verbindungsabschnitt (13B) wenigstens so klein ist, dass eine in einem für die Magneteinheit (10, 20) vorgesehenen, definierten Betriebstemperaturbereich maximal auftretende, thermisch bedingte Materialdehnung des Magnetmaterials kleiner ist als die mittlere Bruchdehnung des Magnetmaterials, aus dem das Magnetelement (12) hergestellt ist.

10. Sensoreinrichtung zum Erfassen einer einen Rotationszustand einer Lenkwelle eines Kraftfahrzeugs charakterisierenden Messgröße, **dadurch gekennzeichnet, dass** die Sensoreinrichtung eine Magneteinheit (10, 20) nach einem der Ansprüche 1 bis 9 aufweist.

11. Kraftfahrzeug mit einer Sensoreinrichtung, **dadurch gekennzeichnet, dass** die Sensoreinrichtung nach Anspruch 10 ausgebildet ist.

**Claims**

1. Magnet unit (10, 20) for a sensor device for acquiring a measurement variable which characterizes a rotation state of a steering shaft of a motor vehicle,

   - wherein the magnet unit (10, 20) has a sleeve (13) and a magnet element (12) which is connected in a positively locking fashion to the sleeve (13),
   - wherein the sleeve (13) has a sleeve connecting section (13B) which extends in the axial direction and has an inner face for connecting to the magnet element (12) and a socket-shaped sleeve attachment section (13A) for connecting the magnet unit (10, 20) to a first part of the steering shaft,
   - wherein the magnet element (12) has a magnet element connecting section (12B) which extends in the axial direction and has an outer face for connecting to the sleeve (13) and a magnetically effective magnet section (12A),
   - wherein the magnet element (12) and the sleeve (13) are connected by means of at least one positively locking connection between the magnet element connecting section (12B) and the sleeve connecting section (13B),
   - wherein the sleeve connecting section (13B) and the magnet element connecting section (12B) are arranged in an overlapping fashion in the axial direction, and the outer face of the magnet element connecting section (12B) bears on the inner face of the sleeve connecting section (13B), and
   - wherein the sleeve (13) and the magnet element (12) have different coefficients of thermal expansion, wherein the coefficient of thermal longitudinal expansion and/or the coefficient of thermal volume expansion of the magnet element are/is preferably greater than the coefficient of thermal longitudinal expansion and/or the coefficient of thermal volume expansion of the sleeve, and wherein in particular the sleeve (13) and the magnet element (12) are embodied in such a way that in a reference state the positively locking connection is free of play in a tangential direction at a reference ambient temperature.

2. Magnet unit (10, 20) according to Claim 1, **characterized in that** the sleeve connecting section (13B) preferably has at least one recess (18), and the magnet element connecting section (12B) has at least a first projection (17) which is designed to correspond to the recess (18) in the sleeve connecting section (13B) and engages in the recess (18) in the sleeve connecting section (13B) and forms a positively locking connection with the recess (18) in the sleeve connecting section (13B).

3. Magnet unit (10, 20) according to at least one of the preceding claims, **characterized in that** a wall thickness of the sleeve connecting section (13B) is greater in the radial direction, preferably over the entire circumference of the sleeve connecting section (13B), than a maximum difference occurring in a thermally induced change in length, in particular in the radial direction, of the recess (18) and projection (17), in a defined operating temperature range which is provided for the magnet unit (10, 20).

4. Magnet unit (10, 20) according to at least one of the abovementioned claims, **characterized in that** at least one recess in the sleeve connecting section (13B) is a recess (18) which is closed in the circumferential direction, preferably a circular opening, in particular a bore hole.

5. Magnet unit (10, 20) according to at least one the abovementioned claims, **characterized in that** at least one projection (17) of the magnet element connecting section which engages in a recess (18) is embodied in a pin shape and extends outwards preferably in a radial direction.

6. Magnet unit (10, 20) according to at least one of the abovementioned claims, **characterized in that** the sleeve (13) is embodied in a bent fashion, preferably in such a way that the sleeve connecting section (13B) is offset in the radial direction with respect to the sleeve attachment section (13A), wherein in particular the sleeve connecting section (13B) is arranged offset outwards in the radial direction with respect to the sleeve attachment section (13A).

7. Magnet unit (10, 20) according to Claim 6, **characterized in that** the magnet element connecting section (12B) is supported in the axial direction on an outward-extending bent section (13C) of the sleeve (13) .

8. Magnet unit (10, 20) according to Claim 6 or 7, **characterized in that** the sleeve (13) is supported with its face of the sleeve connecting section (13B), turned away from the sleeve attachment section (13A), on a side face, extending in the radial direction, of the magnet element (12), preferably on the side face, extending in the radial direction, of the magnetically effective magnet section (12A).

9. Magnet unit (10, 20) according to at least one of the abovementioned claims, **characterized in that** a distance (d) in the axial direction between the side face of the magnet element (12) on which the sleeve (13) is supported with its side face, turned away from the sleeve attachment section (13A), of the sleeve connecting section (13B) and an outer edge, turned towards this side face, of at least one recess (18) in the sleeve connecting section (13B) is at least so small that a maximum thermally induced material expansion of the magnet material which occurs in a defined operating temperature range which is provided for the magnet unit (10, 20) is smaller than the average elongation at break of the magnet material from which the magnet element (12) is manufactured.

10. Sensor device for acquiring a measurement variable which characterizes a rotation state of a steering shaft of a motor vehicle, **characterized in that** the sensor device has a magnet unit (10, 20) according to one of Claims 1 to 9.

11. Motor vehicle having a sensor device, **characterized in that** the sensor device is embodied according to Claim 10.

**Revendications**

1. Unité d'aimant (10, 20) pour dispositif de capteur destiné à saisir une grandeur de mesure qui caractérise l'état de rotation de la colonne de direction d'un véhicule automobile,
l'unité d'aimant (10, 20) présentant un manchon (13) ainsi qu'un élément magnétique (12) relié en correspondance géométrique au manchon (13),
le manchon (13) présentant une section (13B) de liaison de manchon s'étendant dans la direction axiale et dotée d'une surface intérieure assurant la liaison avec l'élément magnétique (12) ainsi qu'une section (13A) de fixation de manchon, en forme de douille, qui assure la liaison de l'unité d'aimant (10, 20) avec une première partie de la colonne de direction,
l'élément magnétique (12) présentant une section (12B) de liaison d'élément magnétique s'étendant dans la direction axiale et dotée d'une surface extérieure qui assure la liaison avec le manchon (13) ainsi qu'une section magnétique (12A) magnétiquement active,
l'élément magnétique (12) et le manchon (13) étant reliés au moyen d'au moins une liaison en correspondance géométrique entre la section (12B) de liaison d'élément magnétique et la section (13B) de liaison de manchon,
la section (13B) de liaison de manchon et la section (12B) de liaison d'élément magnétique se superposant dans la direction axiale et la surface extérieure de la section (12B) de liaison d'élément magnétique reposant contre la surface intérieure de la section (13B) de liaison de manchon,
le manchon (13) et l'élément magnétique (12) présentant des coefficients de dilatation thermique différents, le coefficient de dilatation thermique en longueur et/ou en volume de l'élément magnétique étant supérieur au coefficient de dilatation thermique en longueur et/ou en volume du manchon, le manchon (13) et l'élément magnétique (12) étant configurés en particulier de telle sorte que la liaison en correspondance géométrique dans un état de référence à une température ambiante de référence ne présente aucun jeu dans la direction tangentielle.

2. Unité d'aimant (10, 20) selon la revendication 1, **caractérisée en ce que** la section (13B) de liaison de manchon présente de préférence au moins une découpe (18) et la section (12B) de liaison d'élément magnétique au moins une saillie (17) formée dans la section (13B) de liaison de manchon de manière à correspondre à la découpe (18), s'engageant dans la découpe (18) de la section (13B) de liaison de manchon et formant une liaison en correspondance géométrique avec la découpe (18) de la section (13B) de liaison de manchon.

**3.** Unité d'aimant (10, 20) selon au moins l'une des revendications précédentes, **caractérisée en ce que** l'épaisseur de la paroi de la section (13B) de liaison de manchon dans la direction radiale est supérieure de préférence sur toute la périphérie de la section (13B) de liaison de manchon à la différence maximale dans une plage de température de fonctionnement définie prévue pour l'unité d'aimant (10, 20) entre une modification de longueur provoquée thermiquement, en particulier dans la direction radiale, entre la découpe (18) et la saillie (17).

**4.** Unité d'aimant (10, 20) selon au moins l'une des revendications précédentes, **caractérisée en ce qu'**au moins une découpe ménagée dans la section (13B) de liaison de manchon est une découpe périphérique fermée (18), de préférence une ouverture circulaire et en particulier un alésage.

**5.** Unité d'aimant (10, 20) selon au moins l'une des revendications précédentes, **caractérisée en ce qu'**au moins une saillie (17) de la section de liaison d'élément magnétique qui s'engage dans une découpe (18) a la forme d'une tige et s'étend de préférence dans la direction radiale vers l'extérieur.

**6.** Unité d'aimant (10, 20) selon au moins l'une des revendications précédentes, **caractérisée en ce que** le manchon (13) est coudé à angle droit de préférence de telle sorte que la section (13B) de liaison de manchon soit décalée dans la direction radiale par rapport à la section (13A) de fixation de manchon, la section (13B) de liaison de manchon étant décalée vers l'extérieur dans la direction radiale par rapport à la section (13A) de fixation de manchon.

**7.** Unité d'aimant (10, 20) selon la revendication 6, **caractérisée en ce que** la section (12B) de liaison d'élément magnétique est soutenue dans la direction axiale sur une section coudée (13C) du manchon (13) qui s'étend vers l'extérieur.

**8.** Unité d'aimant (10, 20) selon les revendications 6 ou 7, **caractérisée en ce que** le manchon (13) est soutenu par la surface de la section (13B) de liaison de manchon non tournée vers la section (13A) de fixation de manchon sur une surface latérale, s'étendant dans la direction radiale, de l'élément magnétique (12), de préférence sur la surface latérale, s'étendant dans la direction radiale, de la section magnétique (12A) magnétiquement active.

**9.** Unité d'aimant (10, 20) selon au moins l'une des revendications précédentes, **caractérisée en ce que** la distance (d) dans la direction axiale entre la surface latérale de l'élément magnétique (12) sur lequel le manchon (13) s'appuie par la surface latérale de la section (13B) de liaison de manchon non tournée vers la section (13A) de fixation de manchon et le bord extérieur, tourné vers cette surface latérale, d'au moins une découpe (18) ménagée dans la section (13B) de liaison de manchon est au moins suffisamment petite pour que l'allongement d'origine thermique du matériau magnétique survenant au maximum dans la plage de températures de fonctionnement définie prévue pour l'unité d'aimant (10, 20) est plus petite que l'allongement à la rupture moyen du matériau magnétique dans lequel l'élément magnétique (12) est réalisé.

**10.** Dispositif de capteur destiné à saisir une grandeur de mesure qui caractérise l'état de rotation de la colonne de direction d'un véhicule automobile, **caractérisé en ce que** le dispositif de capteur présente une unité d'aimant (10, 20) selon l'une des revendications 1 à 9.

**11.** Véhicule automobile doté d'un dispositif de capteur, **caractérisé en ce que** le dispositif de capteur est configuré selon la revendication 10.

Fig. 1

Fig. 2a

Fig. 2b

Fig. 2c

Fig. 2d

**IN DER BESCHREIBUNG AUFGEFÜHRTE DOKUMENTE**

**In der Beschreibung aufgeführte Patentdokumente**

- EP 0980081 B1
- EP 1123794 A2
- US 5530344 A
- DE 102013006567 A1
- WO 0980081 B1
- DE 102009039082 A1
- DE 102008047466 A1
- DE 102013015452 A1